(19) Europäisches Patentamt
European Patent Office
Office européen des brevets

(11) **EP 3 857 677 B1**

(12) **FASCICULE DE BREVET EUROPEEN**

(45) Date de publication et mention
de la délivrance du brevet:
**04.03.2026 Bulletin 2026/10**

(21) Numéro de dépôt: **19778676.7**

(22) Date de dépôt: **23.09.2019**

(51) Classification Internationale des Brevets (IPC):
*H02K 1/28* (2006.01)     *H02K 1/2795* (2022.01)
*H02K 15/121* (2025.01)     *H02K 1/02* (2006.01)
*H02K 15/142* (2025.01)

(52) Classification Coopérative des Brevets (CPC):
**H02K 1/2795; H02K 1/02; H02K 1/28;
H02K 15/121;** H02K 15/142

(86) Numéro de dépôt international:
**PCT/IB2019/058015**

(87) Numéro de publication internationale:
**WO 2020/065488 (02.04.2020 Gazette 2020/14)**

(54) **ROTOR A FLUX AXIAL AUX AIMANTS ET CORPS EN COUCHES DE COMPOSITE AVEC FIBRES D'ORIENTATIONS DIFFERENTES**

AXIALFLUSS PERMANENTMAGNETROTOR UND ROTORKÖRPER AUS VERBUNDSCHICHTEN MIT FASERN VERSCHIEDENER ORIENTIERUNGSRICHTUNG

AXIAL-FLUX PERMANENT MAGNET ROTOR AND ROTOR CORE MADE BY LAYERS OF A COMPOSITE WITH FIBERS OF DIFFERENT ORIENTATIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.09.2018 FR 1801010**

(43) Date de publication de la demande:
**04.08.2021 Bulletin 2021/31**

(73) Titulaire: **Whylot
46100 Cambes (FR)**

(72) Inventeurs:
• **MAYEUR, Loic
12300 Saint-santin (FR)**
• **RAVAUD, Romain
46240 Labastide-murat (FR)**

(56) Documents cités:
**EP-A1- 0 353 042     DE-A1- 102010 039 123
FR-A- 1 475 501     FR-A1- 3 014 255
US-A1- 2003 141 721**

**Description**

La présente invention concerne un rotor pour moteur ou génératrice électromagnétique à flux axial présentant un corps de moyeu et branches en couches de composite avec fibres d'orientations différentes. L'invention concerne aussi un moteur ou une génératrice électromagnétique équipé d'un tel rotor.

La présente invention trouve une application avantageuse mais non limitative pour un moteur électromagnétique délivrant une forte puissance avec une vitesse de rotation du rotor élevée, ce qui est obtenu par les caractéristiques spécifiques du rotor selon la présente invention. Un tel moteur peut être utilisé, par exemple, comme moteur électromagnétique dans un véhicule automobile totalement électrique ou hybride.

Avantageusement mais non limitativement, le moteur ou la génératrice électromagnétique peut comprendre au moins un rotor encadré par deux stators, ces éléments pouvant se superposer les uns par rapport aux autres en étant séparés par au moins un entrefer sur un même arbre.

Dans des applications à haute vitesse, il est nécessaire d'avoir une très bonne tenue mécanique de la partie tournante, c'est-à-dire le rotor, afin d'améliorer la fiabilité du système.

Pour une machine électromagnétique à flux axial, le rotor comporte un corps sous forme d'un support discoïdal pour des aimants présentant deux faces circulaires reliées par une épaisseur, le disque étant délimité entre une couronne externe formée par une frette et une périphérie interne délimitant un évidement pour un arbre de rotation.

Les aimants sont chacun maintenus dans le support discoïdal par des moyens de maintien, un intervalle étant laissé entre les aimants.

Les moteurs à flux axial sont souvent utilisés comme moteur ayant des couples massiques supérieurs aux moteurs à flux radial. Ils peuvent donc être utilisés dans des applications à basse vitesse.

Pour les applications à haute vitesse, la conception du rotor dans un moteur à flux axial est plus délicate car les forces dues aux effets centrifuges entraînent des contraintes mécaniques assez importantes dans le rotor. Par ailleurs, les pertes par courant de Foucault deviennent prépondérantes à la fois dans les aimants et également dans la partie rotorique lorsque celle-ci est réalisée avec des matériaux conducteurs de l'électricité.

Pour un rotor qui doit tourner à des vitesses de rotation élevées, le principal désavantage d'un moteur à forte vitesse de rotation réside dans la probabilité élevée de détachement de l'aimant ou des aimants du rotor ainsi que de casse au moins partielle du rotor. Le rotor d'un tel moteur doit donc être apte à supporter des vitesses de rotation élevées. Par exemple des rotors à flux axial pour des vitesses élevées comprenant une pluralité d'aimants par pôle magnétique sont divulgués dans FR3014255 A, DE102010039123A, FR1475501. US2003/141721 divulgue également un procédé de fabrication d'un corps non-magnétique comprenant plusieurs couches de composite, chaque couche de composite contenant des fibres orientées dans une seul direction liées dans une résine et chaque couche de composite ayant une direction différents de l'orientation de la ou des couches de composite adjacentes.

L'état de la technique pousse l'homme du métier à rigidifier le support discoïdal de l'aimant ou des aimants pour combattre la force centrifuge. Ceci requiert un matériau spécifique pour le support discoïdal et d'augmenter son encombrement en l'épaississant afin que le support discoïdal soit plus rigide.

Ceci n'a pas donné entière satisfaction car le moteur ou la génératrice ainsi doté d'un support discoïdal a un poids plus élevé de même qu'un prix de fabrication augmenté.

Une solution peut être de réaliser des maillages d'aimants unitaires allongés dans des structures fibreuses et résinées, de manière à réduire les courants de Foucault et d'utiliser un corps en matériau composite pour le rotor qui ne conduise pas l'électricité, idéalement un rotor en fibre de verre, avec une frette placée à la périphérie du rotor de manière à maintenir les forces dues aux effets centrifuges.

Cependant, pour des applications où les vitesses linéaires deviennent très importantes, les contraintes mécaniques deviennent telles qu'il faut diminuer la masse d'aimant en vue d'accéder à ces vitesses de rotation. Or, le couple que doit fournir une machine électrique est proportionnel à la surface d'aimants en interaction avec les champs magnétiques produits par les stators. Une diminution de la surface d'aimants entraîne donc une diminution du couple et donc de la puissance de la machine.

Le problème à la base de la présente invention est de concevoir un rotor pour le support de plusieurs aimants permanents muni d'une frette pour une machine électromagnétique à flux axial, le rotor présentant un corps regroupant un moyeu et des branches qui puisse, d'une part, maintenir les aimants permanents entre ses branches de manière efficace en évitant aux aimants de se détacher du rotor tout en compensant la force centrifuge de manière efficace et, d'autre part, présenter une résistance mécanique telle que le rotor puisse tourner à des vitesses très élevées.

A cet effet la présente invention concerne un rotor d'une machine électromagnétique à flux axial présentant un corps comportant un moyeu interne concentrique à un axe central de rotation du rotor, des branches s'étendant radialement par rapport à l'axe central de rotation à partir du moyeu interne vers une frette formant un pourtour externe circulaire du rotor, au moins une structure d'aimant à une pluralité d'aimants unitaires étant logé dans chaque espace délimité entre deux branches adjacentes, le corps étant constitué de plusieurs couches de composite contenant des fibres liées par une résine, de manière que aimant unitaire de ladite pluralité d'aimants unitaires de la structure d'aimant s'étend en direction axiale du rotor et ledit aimant unitaire est de forme polygonale allongée ou présente un contour au moins partiellement ovoïde en comportant une première portion formant corps de l'aimant unitaire présentant une plus grande section et s'étendant sur une plus grande longueur de l'aimant unitaire qu'au moins une deuxième portion d'extrémité longitudinale pointant vers une extrémité longitudinale associée de l'aimant unitaire en diminuant de section en se rapprochant de l'extrémité longitudinale et les couches sont superposées et les fibres de chaque couche sont orientées dans une direction prédéterminée différente pour deux couches superposées, une peau de recouvrement radial étant située sur chacune de deux faces opposées du corps du rotor en étant constituée de plusieurs couches superposées de composite contenant des fibres liées par une résine, les aimants de la structure d'aimant étant solidarisés entre eux par une résine renforcée de fibres.

Le composite selon la présente invention ne contient pas de fer.

La configuration du rotor selon la présente invention repose sur la constatation que les contraintes maximales s'appliquant à très haute vitesse sur un rotor se font au niveau du moyeu entourant l'axe de rotation médian du rotor. Il convient donc de solidifier cette portion interne du rotor.

La demanderesse a constaté que la superposition de couches de composition ayant chacune une unique direction prédéterminée d'orientation avec des directions d'orientation différentes pour chaque couche rigidifiait le corps et le rotor. Ceci n'est pas équivalent à avoir une seule couche de composite avec des fibres s'étendant dans deux directions différentes, ce qui de plus difficile de fabrication, les fibres selon deux directions différentes dans une même couche pouvant se déplacer lors de l'injection d'un liant comme la résine.

Pour des applications où les vitesses linéaires deviennent très importantes, typiquement à partir de 160 mètre par seconde ou 180 mètre par seconde, les contraintes mécaniques deviennent telles qu'il faut diminuer la masse d'aimant en vue d'accéder à ces vitesses de rotation. Ceci présente le grand désavantage que le couple que doit fournir une machine électrique est proportionnel à la surface d'aimants en interaction avec les champs magnétiques produits par les stators. Une diminution de la surface d'aimants entraîne donc une diminution du couple et donc de la puissance de la machine.

Selon l'invention, le corps rend le moyeu et les branches d'un seul tenant. Ceci accroît la résistance mécanique de l'ensemble et en conséquence du rotor.

Les peaux ou disques de recouvrement sont disposés sur chaque face circulaire du rotor. La frette peut être en fibres de verre ou de carbone ou en fibres de carbone. La frette en composite entoure circonférentiellement les aimants de grande taille ou les structures d'aimant à une périphérie extérieure du rotor. La frette concourt, si besoin est, au maintien radial des aimants en supplément de celui garanti par la couche externe d'enrobage en composite.

Avantageusement, les fibres d'une couche de composite du corps sont orientées perpendiculairement aux fibres d'une couche de composite superposée adjacente.

Avantageusement, les fibres d'une couche de composite du corps sont orientées avec un décalage de 30° à 45° par rapport aux fibres d'une couche de composite superposée adjacente.

Avantageusement, le nombre de couches de composite du corps est déterminé selon une épaisseur axiale de l'aimant ou de la structure d'aimant et les peaux de recouvrement présentent une épaisseur comprise entre 0,3 et 2 mm.

Avantageusement, chaque branche présente une largeur décroissante en s'éloignant du moyeu interne pour terminer par une pointe effilée contre la frette. Les pointes effilées des branches peuvent être solidarisées ou non à la frette.

La demanderesse a pris en compte que, dans le cas d'une machine à flux axial, le couple est proportionnel au cube du rayon du rotor. Par conséquent, il est plus judicieux d'ajouter de la surface d'aimants à la périphérie du rotor que dans des portions plus internes du rotor. D'où une absence d'aimant à proximité de l'axe de rotation peut être aisément compensée par un ajout d'aimants en périphérie du rotor, ce qui peut être obtenu par des configurations de branches diminuant de largeur plus on s'éloigne du centre du rotor jusqu'à n'être que des pointes effilées d'une largeur voisine de zéro.

Il est donc souhaitable d'augmenter la surface de la section des branches du rotor au niveau de leur raccordement avec le moyeu et de diminuer cette section progressivement en vue d'augmenter la section des surfaces d'aimants pour maintenir un couple moteur important.

Ceci n'avait jamais été envisagé par l'état de la technique qui n'utilisait que des branches de largeur constante et des moyeux de rayon faible pour laisser la place à des aimants. Il existait donc un fort préjugé à réduire la distribution des aimants sur le rotor pour augmenter la résistance mécanique du rotor et l'état de la technique s'orientait vers d'autre solutions comme une augmentation en direction axiale des branches et du moyeu, ce qui augmentait le poids du rotor sans avoir un grand effet bénéfique sur sa résistance.

Avantageusement, les bases de deux branches adjacentes sont séparées par une portion intermédiaire du moyeu interne, la portion intermédiaire étant de forme concave arrondie en direction de l'axe du rotor, le moyeu interne présentant un rayon égal à au moins un quart d'un rayon du rotor.

Les courbures vers l'intérieur des portions intermédiaires entre branches permettent de diminuer les contraintes mécaniques au niveau de la section la plus épaisse des branches prenant appui sur la périphérie externe du moyeu.

Avantageusement, chaque aimant ou structure d'aimant présente une largeur croissante en s'éloignant du moyeu interne pour terminer contre la frette entourant le rotor.

Avantageusement, chaque structure d'aimant est constituée d'une pluralité d'aimants unitaires solidarisés par un matériau isolant renforcé de fibres, chaque aimant unitaire étant de forme allongée en s'étendant en direction axiale du rotor.

Ceci vaut principalement pour l'utilisation des peaux de recouvrement. Les aimants de grande taille utilisés pour le rotor selon l'état de la technique dissipaient une grande quantité de chaleur. Cette dissipation empêchait d'utiliser des moyens de maintien axial sous forme de peaux ou disques de recouvrement en composite et la dissipation de chaleur pouvait avoir des conséquences sur la tenue de l'enrobage avec un vieillissement accéléré de cet enrobage ainsi que des aimants.

Les disques de recouvrement en composite n'étaient pas fréquemment utilisés dans l'état de la technique car ne résistant pas à la dissipation de chaleur engendrée par les aimants.

Comme la présente invention utilise de préférence une multitude d'aimants unitaires remplaçant un aimant compact de l'état de la technique, la dissipation de chaleur est moindre et des peaux ou disques de recouvrement peuvent être utilisés comme moyens de maintien axial, ces peaux ou disques remplaçant avantageusement des moyens de maintien axial entre aimants et corps du rotor, nécessitant le cas échéant des modifications des aimants ou de leur enrobage pour réaliser des moyens complémentaires de fixation avec des moyens de fixation portés par le rotor.

Une autre synergie procurée par la présente invention est que le rotor peut présenter entre chaque branche des aimants unitaires regroupés dans une structure d'aimant. Chaque structure d'aimant en trois dimensions est constituée d'une pluralité d'aimants unitaires.

Ceci permet d'avoir une structure d'aimant présentant de nombreux aimants unitaires. Il s'est révélé qu'une structure avec une telle pluralité d'aimants unitaires avait un grand pouvoir de ne pas être sensible aux harmoniques d'espace ou de courants générés par les bobinages statoriques. Par conséquent, les pertes générées dans les structures d'aimants sont très faibles, et les rendements, particulièrement à haute vitesse, sont très élevés. Une telle structure d'aimant peut former un pole d'aimant ou être un aimant complet.

Une des mesures préférentielles de la présente invention est de décomposer une structure d'aimant pouvant être un aimant entier ou un pôle magnétique selon l'état de la technique en une pluralité de petits ou micro-aimants. Un gros aimant est sujet à des pertes par courants de Foucault plus importantes que son équivalent en petits ou micro-aimants. L'utilisation de petits aimants ou de micro-aimants permet donc de réduire ces pertes qui sont préjudiciables au fonctionnement de l'actionneur électromagnétique.

Il est connu que, pour obtenir un champ magnétique d'intensité optimale, le volume idéal d'un aimant doit s'approcher d'un cube ou d'un cylindre dont la longueur est égale au diamètre. Il est de connaissance courante qu'augmenter la longueur d'un aimant au-delà n'apporte aucune augmentation du champ magnétique. La démarche de la présente invention dans cette forme préférentielle va cependant dans le sens contraire de ce préjugé.

La longueur d'un aimant unitaire est sensiblement augmentée par rapport au diamètre ou à une diagonale de sa face longitudinale plane par rapport à ce que la pratique largement répandue préconise, ceci essentiellement pour répondre à des besoins de résistance mécanique de la structure, ce qui est le but principal de la présente invention.

La demanderesse a découvert qu'une pluralité d'aimants unitaires dans une structure d'aimant donne une structure d'aimant présentant une résistance mécanique beaucoup plus importante tout en gardant des propriétés magnétiques quasi similaires à celles d'un aimant seul ayant une surface égale à n fois la surface élémentaire des n aimants unitaires quand n aimants unitaires sont présents.

Les aimants ovoïdes peuvent présenter des facettes. On obtient ainsi comme aimants unitaires des " cristaux" associés entre eux qui ne sont pas liés sur toute la surface de facettes ou de faces longitudinales mais des couches de résine et de colle viennent construire un réseau maillé aux extrémités des plots polyfacettes avec des zones de contact entre aimants limitées.

En alternative, pour des aimants unitaires de forme ovoïde parfaite avec une première portion arrondie, le contact entre deux aimants unitaires adjacents est plus réduit en ne pouvant n'être que ponctuel et correspond sensiblement à un arc de cercle de dimension réduite entre les deux aimants unitaires. Il peut être creusé une strie à la dimension de l'arc de cercle de contact entre deux aimants unitaires adjacents pour recevoir de la colle, avantageusement sous forme de résine.

Avantageusement, la pluralité d'aimants unitaires d'une structure d'aimant sont solidarisés par un matériau isolant renforcé de fibres, chaque aimant unitaire étant de forme allongée en s'étendant en direction radiale du rotor.

Avantageusement, chaque structure d'aimant intègre au moins un maillage présentant des mailles délimitant chacune un logement pour un aimant unitaire respectif, chaque logement présentant des dimensions internes justes suffisantes pour permettre une introduction d'un aimant unitaire en son intérieur tout en laissant un espace entre le logement et l'aimant unitaire rempli par une résine renforcée de fibres, les mailles étant en matériau isolant renforcé de fibres.

Le maillage reste en place en pouvant être aussi enrobé dans une couche de composite. Un tel maillage permet de maintenir des aimants unitaires lors de la fabrication de la structure d'aimant et présente l'avantage de représenter un élément de solidification supplémentaire de la structure d'aimant, le maillage pouvant contenir aussi des fibres de renforcement.

Par exemple, un maillage en nid d'abeille est connu pour renforcer la résistance d'un élément, dans ce cas une structure d'aimant. Les aimants unitaires sont insérés dans des logements hexagonaux qui assurent leur maintien. Les parois des logements servent d'isolant électrique et la densité des logements dans la structure d'aimant peut être considérablement augmentée. Le maillage en nid d'abeille peut être en matériau composite isolant renforcé de fibres.

Avantageusement, chaque aimant ou structure d'aimant entre deux branches adjacentes est noyé dans au moins une couche de composite, le rotor étant aussi enrobé dans au moins une couche de composite englobant les structures d'aimants noyés et le corps constitué de plusieurs couches de composite.

Avantageusement, les couches de composite noyant le rotor et constituant le moyeu et les branches du corps sont en fibres de verre ou de carbone coulées dans de la résine. Ces fibres de renforcement concourent à augmenter la résistance de la structure d'aimant et notamment la rigidité à la flexion et au flambement.

L'invention concerne aussi un procédé de fabrication des couches dudit rotor selon l'une quelconque des revendications précédentes et comprenant un corps constitué de plusieurs couches de composite contenant des fibres liées par une résine, lequel procédé comprend une première étape de coulée d'une première couche de composite, les fibres de la première couche étant orientées dans une seule même direction prédéterminée, comprend au moins un autre étape de coulée d'une deuxième couche de composite superposée à la première couche de composite, les fibres de ladite au moins une deuxième couche étant orientées dans une autre direction prédéterminée différente de la première direction de la couche adjacente qu'elle superpose, préférablement une ou plusieurs étapes de coulée et une étape de durcissement de la résine.

Ce procédé est facile de mise en œuvre et conserve l'orientation des fibres plus facilement que s'il y avait plusieurs orientations différentes de fibres par couche de composite.

Avantageusement, la largeur de chaque branche du corps du moyeu en un point de sa longueur s'étendant radialement de la périphérie externe du moyeu à la périphérie interne de la frette est déterminée à partir d'une évaluation d'une contrainte mécanique admissible susceptible d'être appliquée au rotor, d'une vitesse maximale admissible de rotation du rotor et d'une résistance mécanique du matériau de la branche, une décroissance de la largeur de chaque branche en éloignement du moyeu étant obtenue en sélectionnant pour chaque branche une largeur pour chaque point de sa longueur permettant d'obtenir une iso-contrainte à l'intérieur de la branche.

Sans que cela soit limitatif, la contrainte maximale s'exerçant sur une branche vers son extrémité raccordée au moyeu peut être évaluée à 120 mega Pascals. L'obtention de cette iso-contrainte permet de minimiser la largeur de la branche et donc de mettre davantage de surface d'aimants de grande taille ou de structures d'aimant, donc dans ce dernier cas plus d'aimants unitaires, ce qui permet d'obtenir plus de couple et de plus de compenser la perte de surface d'aimant vers le moyeu.

L'invention concerne enfin un moteur ou génératrice électromagnétique à flux axial caractérisé en ce qu'il comprend au moins un tel rotor, le moteur ou la génératrice électromagnétique comprenant au moins un stator portant au moins un bobinage, le moteur ou la génératrice électromagnétique comprenant un ou plusieurs entrefers entre ledit au moins un rotor et ledit au moins un stator.

D'autres caractéristiques, buts et avantages de la présente invention apparaîtront à la lecture de la description détaillée qui va suivre et au regard des dessins annexés donnés à titre d'exemples non limitatifs et sur lesquels :

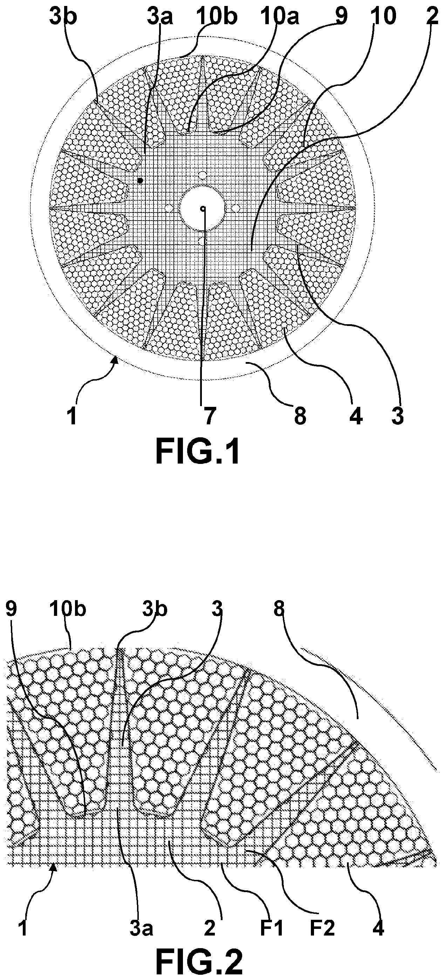

- la figure 1 est une représentation schématique d'une vue de face d'un rotor destiné à une machine électromagnétique à flux axial selon une première forme de réalisation de la présente invention, un corps regroupant le moyeu et les branches du rotor étant constitué de couches de composite avec chacune des orientations différentes de 90° des fibres dans deux couches différentes,
- la figure 2 est une représentation schématique agrandie d'une portion de rotor montrée à la figure 1,

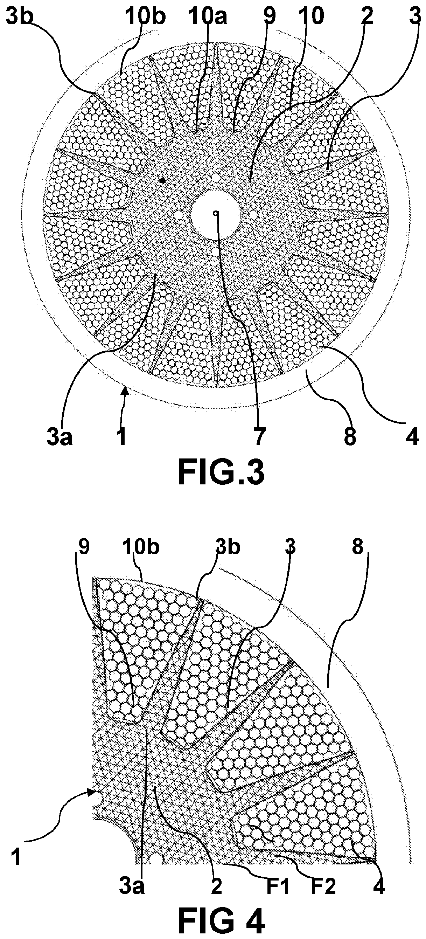

- la figure 3 est une représentation schématique d'une vue de face d'un rotor destiné à une machine électromagnétique à flux axial selon une première forme de réalisation de la présente invention, un corps regroupant le moyeu et les branches du rotor étant constitué de couches de composite avec chacune des orientations différentes de 30° des fibres dans deux couches différentes,
- la figure 4 est une représentation schématique agrandie d'une portion de rotor montrée à la figure 3,

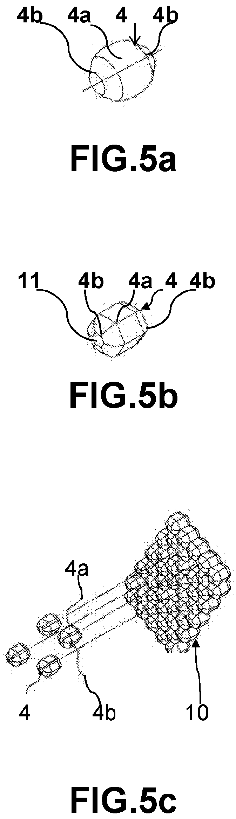

- les figures 5a, 5b et 5c sont des représentations schématiques pour les figures 5a et 5b d'une forme de réalisation respective d'un aimant unitaire de forme ovoïde et pour la figure 5c d'une structure d'aimant comprenant des aimants unitaires ovoïdes, quatre aimants unitaires ovoïdes étant montrés espacés de la structure d'aimant.

Les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier les dimensions des différentes pièces ne sont pas représentatives de la réalité.

Dans ce qui va suivre une seule branche 3, une seule base 3a et une seule pointe effilée 3b de la branche 3 sont référencées pour toutes les branches aux figures 1 à 4. Il en va de même pour une seule structure d'aimant référencée 10 avec des faces interne 10a et externe 10b, une portion intermédiaire 9 entre deux branches pour toutes les portions intermédiaires et une seule orientation de fibre F1 ou F2 par couche de composite aux figures 2 et 4. Aux figures 1 à 4, un seul aimant unitaire 4 est référencé pour tous les aimants unitaires dans une structure d'aimant 10.

Tout ce qui est énoncé pour un de ces éléments référencés s'applique à tous les éléments similaires non référencés.

En se référant à toutes les figures et plus particulièrement aux figures 1 à 4, ces figures montrent respectivement un rotor 1 et un agrandissement d'une portion d'un rotor 1 selon la présente invention avec deux branches 3 intercalant entre elles une structure d'aimant 10 composée de plusieurs aimants unitaires 4 polygonaux.

Ceci n'est pas limitatif et un aimant unique de grande taille peut être intercalé entre deux branches 3, cet aimant unique de grande taille n'étant pas à confondre avec les aimants unitaires 4 d'une structure d'aimant 10 visibles et référencés aux figure 2 et 4.

Un tel rotor 1 sert dans un moteur ou une génératrice électromagnétique, avantageusement à flux axial. Le rotor 1, avantageusement sensiblement circulaire, présente un corps comportant un moyeu 2 interne concentrique à un axe central 7 de rotation du rotor 1 ou axe médian longitudinal du rotor 1. Des branches 3 s'étendent radialement dans le rotor 1 par rapport à l'axe central 7 de rotation à partir du moyeu 2 interne vers une frette 8 formant un pourtour externe circulaire du rotor 1.

Le moyeu 2 et les branches 3 sont d'un même tenant et forment un corps de rotor 2, 3. Au moins un aimant, alors un aimant de grande taille ou une structure d'aimant 10 comprenant une pluralité d'aimants unitaires 4 de petite taille est logé dans chaque espace délimité entre deux branches 3 adjacentes.

Selon la présente invention, le corps 2, 3 est constitué de plusieurs couches superposées de composite contenant des fibres liées par une résine, les fibres de chaque couche étant orientées dans une direction F1, F2 prédéterminée différente pour deux couches superposées.

Une peau ou un disque de recouvrement, non montré aux figures car recouvrant radialement une face circulaire du rotor 1 est située sur chacune de deux faces opposées du corps 2, 3 du rotor en étant constituée de plusieurs couches superposées de composite contenant des fibres liées par une résine. Les peaux ou disques de recouvrement, non montrés aux figures, peuvent être disposés sur chaque face circulaire du rotor 1 pour empêcher un mouvement axial des structures d'aimant 10 ou des aimants de grande taille entre deux branches 3.

Toutes ces caractéristiques prises en combinaison rigidifient considérablement le corps 2, 3 du rotor 1.

Plusieurs modes de réalisation des couches de composite peuvent être envisagés. Des exemples non limitatifs vont être maintenant donnés.

Comme montré aux figures 1 et 2, les fibres d'une couche de composite du corps 2, 3 peuvent être orientées perpendiculairement aux fibres d'une couche de composite superposée adjacente, les directions F1 et F2 montrées à la figure 2 étant perpendiculaires.

Comme montré aux figures 3 et 4, les fibres d'une couche de composite du corps 2, 3 sont orientées avec un décalage de 30° à 45° par rapport aux fibres d'une couche de composite superposée adjacente, à ces figures de 30°.

Il peut y avoir plus de deux couches de composite superposées. Le nombre de couches de composite du corps 2, 3 est déterminé selon une épaisseur axiale de l'aimant ou de la structure d'aimant 10 et les peaux de recouvrement présentent une épaisseur comprise entre 0,3 et 2 mm.

Comme montré le mieux aux figures 1 et 3, chaque branche 3 peut présenter une largeur décroissante en s'éloignant du moyeu 2 interne pour terminer par une pointe effilée 3b contre la frette 8.

Chaque aimant de grande taille ou structure d'aimant 10 peut présenter une largeur la croissante en s'éloignant du moyeu 2 interne pour terminer contre la frette 8 entourant le rotor 1.

La place perdue pour les aimants en augmentant la largeur des branches 3 vers leur portion d'extrémité ou base 3a en vis-à-vis du moyeu 2 et, le cas échéant, en augmentant aussi le rayon du moyeu 2 est rattrapée sur les portions d'extrémité périphérique du rotor 1.

Le fait de placer chaque aimant de grande taille ou chaque structure d'aimant 10 avec leur plus grande largeur orientée vers la périphérie externe du rotor 1 permet d'augmenter les parties d'aimant placées à la périphérie du rotor 1 et donc d'augmenter la surface totale d'aimantation.

Toujours en se référant plus particulièrement aux figures 1 et 3, la pointe effilée 3b de chaque branche 3 peut être au moins de deux à quatre fois moins large qu'une base 3a de la branche 3 reliée au moyeu 2 interne.

Les bases 3a de deux branches 3 adjacentes peuvent être séparées par une portion intermédiaire 9 du moyeu 2 interne. Cette portion intermédiaire 9 peut être de forme concave arrondie en direction de l'axe du rotor 1. Le moyeu 2 interne peut présenter un rayon égal à au moins un quart d'un rayon du rotor 1, ce qui en fait un moyeu 2 plus grand qu'un moyeu 2 de l'état de la technique. Le rayon du rotor est égal au rayon d'une branche 3 auquel il est ajouté une épaisseur de frette 8.

Le moyeu 2 et les branches 3 peuvent être en fibres de verre ou de carbone coulées dans de la résine. Des fibres en plastique résistant peuvent aussi être utilisées afin d'augmenter la résistance du rotor 1 et notamment la rigidité à la flexion et au flambement.

Comme précédemment mentionné, pour solidifier le rotor 1, le moyeu 2 et les branches 3 sont d'un seul tenant en formant le corps en composite avec des fibres de différentes orientations F1, F2 selon la couche de composite qui les contient. Les branches 3 peuvent être solidarisées ou non à la frette 8 par leur extrémité effilée 3b.

En se référant plus particulièrement aux figures 1, 3, 5a à 5c, chaque structure d'aimant 10 peut être constituée d'une pluralité d'aimants unitaires 4 solidarisés par un matériau isolant renforcé de fibres, chaque aimant unitaire 4 étant de forme allongée en s'étendant en direction axiale du rotor 1. Les aimants unitaires 4 dont un seul est référencé par figure ne sont pas à confondre avec les structures d'aimant 10 ni avec des aimants de grande taille non représentés aux figures.

Il s'ensuit que chaque structure d'aimant 10 peut être en trois dimensions et constituée d'une pluralité d'aimants unitaires 4.

Aux figures 1 à 4, chaque aimant unitaire 4 de la pluralité d'aimants unitaires 4 est de forme polygonale.

Aux figures 5a, 5b et 5c, chaque aimant unitaire 4 peut présenter un contour au moins partiellement ovoïde en comportant une première portion 4a formant corps de l'aimant unitaire 4 présentant une plus grande section et s'étendant sur une plus grande longueur de l'aimant unitaire 4 qu'au moins une deuxième portion 4b d'extrémité longitudinale pointant vers une extrémité longitudinale associée de l'aimant unitaire 4 en diminuant de section en se rapprochant de l'extrémité longitudinale.

A la figure 5a, l'aimant unitaire 4 présente une forme ovoïde presque parfaite avec une première portion 4a et deux deuxièmes portions 4b d'extrémité arrondies et de forme convexe. Comme il peut être vu à la figure 5c, le contact entre deux aimants unitaires 4 adjacents et ovoïdes est sensiblement ponctuel ou s'étend selon un arc de cercle limité.

Dans ce cas, l'aimant unitaire 4 peut présenter un contour extérieur au moins partiellement ovoïde avec la première portion 4a formant corps de l'aimant unitaire 4 présentant une plus grande section et s'étendant sur une plus grande longueur de l'aimant unitaire 4 que ladite au moins une deuxième portion 4b.

A la figure 5b, l'aimant unitaire 4 peut présenter au moins une deuxième portion 4b à au moins une extrémité longitudinale de l'aimant unitaire 4 en prolongement de la première portion 4a. Il peut y avoir deux deuxièmes portions 4b avec une deuxième portion 4b respectivement à une extrémité longitudinale de l'aimant unitaire 4.

La ou les deuxièmes portions 4b peuvent pointer vers une extrémité longitudinale associée de l'aimant en diminuant de section en se rapprochant de l'extrémité longitudinale.

Comme montré à la figure 5b, la ou les deuxièmes portions 4b d'extrémité longitudinale peuvent être bombées en étant de forme convexe. La ou les deuxièmes portions 4b d'extrémité longitudinale peuvent se terminer à leur extrémité longitudinale associée par une facette médiane 11 formant l'extrémité longitudinale. A la figure 5b, pour la forme ovoïde, cette facette médiane 11 formant l'extrémité longitudinale est cependant bombée et n'est qu'optionnelle.

A cette figure 5b, la ou les deuxièmes portions 4b d'extrémité longitudinale peuvent comprendre des facettes latérales inclinées vers un axe longitudinal de l'aimant unitaire 4 en s'approchant de l'extrémité longitudinale associée de l'aimant unitaire 4.

Comme montré à la figure 5c, dans une structure d'aimant 10, les aimants unitaires 4 sont directement adjacents les uns aux autres en étant partiellement en contact. Les aimants unitaires 4 sont collés par dépôt de colle. La pluralité d'aimants unitaires 4 réalise un maillage d'aimants sans interposition d'éléments de maintien entre eux autres que la colle, les aimants unitaires 4 étant en contact direct entre aimants adjacents. La première portion 4a et la deuxième portion 4b pour un aimant unitaire sont aussi montrées à cette figure 5c.

Aux figures 2 et 4, les aimants unitaires 4 peuvent être collés les uns contre les autres sans maillage entre eux. Il en va de même pour la figure 5c. La colle peut être une couche de composite, une résine de collage, avantageusement thermodurcissable ou thermoplastique.

Chaque aimant de grande taille ou structure d'aimant 10 entre deux branches 3 adjacentes peut aussi être noyé dans une couche de composite. Le rotor peut aussi être enrobé dans une couche de composite dans son entité.

Il peut donc y avoir superposition d'au moins une première couche de composite pour entourer les aimants unitaires 4, d'au moins une deuxième couche de composite pour entourer individuellement les structures d'aimant 10 et d'au moins une troisième couche de composite pour enrober le rotor 1, sachant que le corps 2, 3, comportant le moyeu 2 et les branches du rotor, est aussi constitué de couches de composite superposées avec des fibres de différentes orientations selon la couche.

Comme non montré aux figures mais en se servant des références qui sont déjà indiquées aux figures pour des éléments similaires, chaque structure d'aimant 10 peut intégrer au moins un maillage présentant des mailles délimitant chacune un logement pour un aimant unitaire 4 respectif. Chaque logement peut présenter des dimensions internes justes suffisantes pour permettre une introduction d'un aimant unitaire 4 en son intérieur tout en laissant un espace entre le logement et l'aimant unitaire 4 rempli par une résine renforcée de fibres, les mailles étant en matériau isolant renforcé de fibres.

La frette 8 peut être en fibres de verre ou de carbone ou en fibres de carbone. La frette 8 en composite entoure circonférentiellement les structures d'aimant 10 ou les aimants de grande taille à une périphérie extérieure du rotor 1. La frette 8 concourt, si besoin est, au maintien radial des structures d'aimant 10 ou des aimants de grande taille en complément de celui garanti par la couche externe d'enrobage en composite. Les pointes effilées 5b des branches 3 peuvent être solidarisées ou non à la frette 8.

La présente invention concerne un procédé de fabrication d'un rotor 1 avec pour la fabrication de son corps 2, 3 comportant un moyeu 2 et des branches 3 la mise en œuvre des étapes suivantes.

La première étape est une coulée d'une première couche de composite contenant des fibres liées par une résine, les fibres de la première couche étant orientées dans une même direction F1 prédéterminée.

La deuxième étape est une coulée d'au moins une deuxième couche de composite contenant des fibres liées par une résine, les fibres de la deuxième couche étant orientées dans une direction F2 prédéterminée différente de la direction F1 de la première couche.

La troisième étape est le durcissement de la résine.

Le corps 2, 3 est alors prêt à l'emploi pour former l'ossature du rotor 1.

Avantageusement, l'invention concerne aussi un procédé de fabrication d'un tel rotor 1, dans lequel la largeur l de chaque branche 3 en un point de sa longueur s'étendant radialement de la périphérie externe du moyeu 2 à la périphérie interne de la frette 8 à une distance connue de l'axe central 7 de rotation du rotor 1 est déterminée à partir d'une évaluation d'une contrainte mécanique admissible susceptible d'être appliquée au rotor 1, d'une vitesse maximale admissible de rotation du rotor 1 et d'une résistance mécanique du matériau de la branche.

Une décroissance de la largeur de chaque branche 3 en éloignement du moyeu 2 est obtenue en sélectionnant pour chaque branche 3 une largeur pour chaque point de sa longueur permettant d'obtenir une iso-contrainte à l'intérieur de la branche 3.

Il est visible aux figures 1 et 3 que la largeur des branches 3 décroît plus le rayon augmente donc en éloignement de l'axe central 7 du rotor 1.

Avantageusement, la largeur de chaque branche en un point de sa longueur s'étendant radialement est donnée par l'équation suivante :

$$l(r) = K \frac{\rho}{\sigma m} \theta W^2 r^2$$

K étant une constante variant selon une épaisseur de la frette 8 et représentative de la résistance mécanique du matériau de la branche, $\rho$ une masse volumique de l'aimant ou de la structure d'aimant 10, $\sigma m$ une contrainte mécanique admissible susceptible d'être appliquée sur le rotor 1 et en conséquence sur la branche, $\theta$ un angle d'ouverture de chaque aimant ou de chaque structure d'aimant 10 et W la vitesse de rotation maximale admissible du rotor 1.

L'invention concerne enfin un moteur ou une génératrice électromagnétique à flux axial comprenant au moins un tel rotor 1, le moteur ou la génératrice électromagnétique comprenant au moins un stator portant au moins un bobinage, le moteur ou la génératrice électromagnétique comprenant un ou plusieurs entrefers entre ledit au moins un rotor 1 et ledit au moins un stator.

Le moteur ou la génératrice électromagnétique peut comprendre de préférence au moins un rotor 1 associé à deux stators.

**Revendications**

1. Rotor (1) d'un moteur ou d'une génératrice électromagnétique présentant un corps (2, 3) comportant un moyeu (2) interne concentrique à un axe central (7) de rotation du rotor (1), des branches (3) s'étendant radialement par rapport à l'axe central (7) de rotation à partir du moyeu (2) interne vers une frette (8) formant un pourtour externe circulaire du rotor (1), au moins une structure d'aimant (10) à une pluralité d'aimants (4) étant logé dans chaque espace délimité entre deux branches (3) adjacentes, le corps (2, 3) étant constitué de plusieurs couches de composite contenant des fibres liées par une résine, **caractérisé en ce que** chaque aimant unitaire (4) de la pluralité d'aimants unitaires (4) de la structure d'aimant (10) s'étend en direction axiale du rotor (1) et est de forme polygonale allongée ou présente un contour au moins partiellement ovoïde en comportant une première portion formant corps de l'aimant unitaire (4) présentant une plus grande section et s'étendant sur une plus grande longueur de l'aimant unitaire (4) qu'au moins une deuxième portion d'extrémité longitudinale pointant vers une extrémité longitudinale associée de l'aimant unitaire (4) en diminuant de section en se rapprochant de l'extrémité longitudinale et **en ce que** les couches sont superposées et les fibres de chaque couche sont orientées dans une direction (F1, F2) prédéterminée différente pour deux couches superposées, une peau de recouvrement radial étant située sur chacune de deux faces opposées du corps (2, 3) du rotor en étant constituée de plusieurs couches superposées de composite contenant des fibres liées par une résine, les aimants (4) de la structure d'aimant (10) étant solidarisés entre eux par une résine renforcée de fibres.

2. Rotor (1) selon la revendication 1, dans lequel les fibres d'une couche de composite du corps (2, 3) sont orientées perpendiculairement aux fibres d'une couche de composite superposée adjacente.

**3.** Rotor (1) selon la revendication 1, dans lequel les fibres d'une couche de composite du corps (2, 3) sont orientées avec un décalage de 30° à 45° par rapport aux fibres d'une couche de composite superposée adjacente.

**4.** Rotor (1) selon l'une quelconque des revendications précédentes, dans lequel le nombre de couches de composite du corps (2, 3) est déterminé selon une épaisseur axiale de la structure d'aimant (10) et les peaux de recouvrement présentent une épaisseur comprise entre 0,3 et 2 mm.

**5.** Rotor (1) selon l'une quelconque des revendications précédentes, dans lequel chaque branche (3) présente une largeur décroissante en s'éloignant du moyeu (2) interne pour terminer par une pointe effilée (3b) contre la frette (8).

**6.** Rotor (1) selon la revendication précédente, dans lequel les bases (3a) de deux branches (3) adjacentes sont séparées par une portion intermédiaire (9) du moyeu (2) interne, la portion intermédiaire (9) étant de forme concave arrondie en direction de l'axe du rotor (1), le moyeu (2) interne présentant un rayon égal à au moins un quart d'un rayon du rotor (1).

**7.** Rotor (1) selon l'une quelconque des revendications précédentes, dans lequel chaque structure d'aimant (10) présente une largeur croissante en s'éloignant du moyeu (2) interne pour terminer contre la frette (8) entourant le rotor (1).

**8.** Rotor (1) selon la revendication précédente, dans lequel chaque structure d'aimant (10) intègre au moins un maillage présentant des mailles délimitant chacune un logement pour un aimant unitaire (4) respectif, chaque logement présentant des dimensions internes justes suffisantes pour laisser un espace entre le logement et l'aimant unitaire (4) rempli par la résine renforcée de fibres après introduction d'un aimant unitaire (4) en son intérieur, les mailles étant en matériau isolant renforcé de fibres.

**9.** Rotor (1) selon l'une quelconque des revendications précédentes, dans lequel chaque structure d'aimant (10) entre deux branches (3) adjacentes est noyé dans au moins une couche de composite, le rotor (1) étant aussi enrobé dans au moins une couche de composite englobant les structures d'aimants noyés et le corps (2, 3) constitué de plusieurs couches de composite.

**10.** Rotor (1) selon la revendication précédente, dans lequel les couches de composite noyant le rotor et constituant le moyeu (2) et les branches du corps (2, 3) sont en fibres de verre ou de carbone coulées dans de la résine.

**11.** Procédé de fabrication d'un rotor (1) selon l'une quelconque des revendications précédentes présentant un corps (2,3) comportant un moyeu interne (2) et plusieurs branches (3), une frette (8) sur le pourtour externe du rotor et une structure d'aimant (10) à une pluralité d'aimant (4) présentant, dans la direction axiale, une forme polygonale allongée ou un contour au moins partiellement ovoïde et le corps est constitué de plusieurs couches de composite contenant des fibres liées par une résine, lequel procédé comprend l'étape de coulée d'une première couche de composite, les fibres de la première couche étant orientées dans une même direction (F1) prédéterminée, **caractérisé par** les étapes de coulée d'au moins une deuxième couche de composite superposée à la première couche de composite, les fibres de ladite au moins une deuxième couche étant orientées dans une direction (F2) prédéterminée différente de la direction (F1) de la couche adjacente qu'elle superpose, et de durcissement de la résine.

**12.** Moteur ou génératrice électromagnétique à flux axial, **caractérisé en ce qu'**il comprend au moins un rotor (1) selon l'une quelconque des revendications 1 à 10, le moteur ou la génératrice électromagnétique comprenant au moins un stator portant au moins un bobinage, le moteur ou la génératrice électromagnétique comprenant un ou plusieurs entrefers entre ledit au moins un rotor (1) et ledit au moins un stator.

**Patentansprüche**

**1.** Rotor (1) eines elektromagnetischen Motors oder Generators, der einen Körper (2, 3) aufweist, der eine innere Nabe (2) konzentrisch zu einer zentralen Drehachse (7) des Rotors (1) beinhaltet, wobei sich Verzweigungen (3) radial in Bezug zur zentralen Drehachse (7) von der inneren Nabe (2) zu einer Schrumpfscheibe (8) erstrecken, die einen kreisförmigen äußeren Umfang des Rotors (1) bildet, mindestens

eine Magnetstruktur (10) mit einer Vielzahl von Magneten (4), die in jedem zwischen zwei benachbarten Verzweigungen (3) begrenzten Raum untergebracht sind, wobei der Körper (2, 3) aus mehreren Verbundschichten besteht, die Fasern enthalten, die durch ein Harz verbunden sind, **dadurch gekennzeichnet, dass** sich jeder einzelne Magnet (4) der Vielzahl von einzelnen Magneten (4) der Magnetstruktur (10) in axialer Richtung des Rotors (1) erstreckt und in einer länglichen polygonalen Form ist oder eine mindestens teilweise eiförmige Kontur aufweist, und dabei einen ersten Abschnitt beinhaltet, der den Körper eines einzelnen Magneten (4) bildet, der einen größeren Querschnitt aufweist und sich über eine größere Länge des einzelnen Magneten (4) erstreckt als mindestens ein zweiter Längsendabschnitt,

der auf ein zugehöriges Längsende des einzelnen Magneten (4) zeigt, sich beim Annähern des Längsendes im Querschnitt verringert, und dadurch, dass die Schichten überlagert sind und die Fasern jeder Schicht in eine andere vorbestimmte Richtung (F1, F2) für zwei überlagerte Schichten ausgerichtet sind, wobei sich eine radiale Deckschale

auf jeder der zwei gegenüberliegenden Seiten des Körpers (2, 3) des Rotors befindet, und aus mehreren überlagerten Verbundschichten besteht, die Fasern enthalten, die durch ein Harz verbunden sind, wobei die Magneten (4) der Magnetstruktur (10) durch ein faserverstärktes Harz miteinander verbunden sind.

2. Rotor (1) nach Anspruch 1, wobei die Fasern einer Verbundschicht

des Körpers (2, 3) senkrecht zu den Fasern einer benachbarten überlagerten Verbundschicht ausgerichtet sind.

3. Rotor (1) nach Anspruch 1, wobei die Fasern einer Verbundschicht des Körpers (2, 3) mit einem Versatz von 30° bis 45° zu den Fasern einer benachbarten überlagerten Verbundschicht ausgerichtet sind.

4. Rotor (1) nach einem der vorstehenden Ansprüche, wobei

die Anzahl an Verbundschichten des Körpers (2, 3) nach einer axialen Dicke der Magnetstruktur (10) bestimmt wird und die Deckschalen eine Dicke aufweisen, die zwischen 0,3 und 2 mm liegt.

5. Rotor (1) nach einem der vorstehenden Ansprüche, wobei

jede Verzweigung (3) eine abnehmende Breite aufweist, wenn sie sich von der inneren Nabe (2) wegbewegt, um mit einer konischen Spitze (3b) an der Schrumpfscheibe (8) abzuschließen.

6. Rotor (1) nach dem vorstehenden Anspruch, wobei die Basen (3a) zweier benachbarter Verzweigungen (3) durch einen Zwischenabschnitt

(9) von der inneren Nabe (2) getrennt sind, wobei der Zwischenabschnitt (9) in Richtung der Achse des Rotors (1) abgerundet konkav geformt ist, wobei die innere Nabe (2) einen Radius gleich mindestens einem Viertel eines Radius des Rotors (1) aufweist.

7. Rotor (1) nach einem der vorstehenden Ansprüche, wobei jede Magnetstruktur (10) eine zunehmende Breite aufweist,

wenn sie sich von der inneren Nabe (2) entfernt, um an der Schrumpfscheibe (8) abzuschließen, die den Rotor (1) umgibt.

8. Rotor (1) nach dem vorstehenden Anspruch, wobei jede Magnetstruktur (10) mindestens ein Maschennetz integriert, das Maschen aufweist, die jeweils eine Aufnahme für einen jeweiligen einzelnen Magneten (4) begrenzen,

wobei jede Aufnahme knappe ausreichende Innenabmessungen aufweist, um einen mit dem faserverstärkten Harz gefüllten Freiraum zwischen der Aufnahme und dem einzelnen Magneten (4) zu lassen, nachdem ein einzelner Magnet (4) in sein Inneres eingeführt worden ist, wobei die Maschen aus faserverstärktem Isoliermaterial bestehen.

9. Rotor (1) nach einem der vorstehenden Ansprüche, wobei

jede Magnetstruktur (10) zwischen zwei benachbarten Verzweigungen (3) in mindestens einer Verbundschicht eingelassen ist, wobei der Rotor (1) auch in mindestens einer Verbundschicht ummantelt ist, welche die eingelassenen

Magnetstrukturen (2, 3) und den Körper umschließt, der aus mehreren Verbundschichten besteht.

10. Rotor (1) nach dem vorstehenden Anspruch, wobei die Verbundschichten, die den Rotor einlassen und die Nabe (2) und die Verzweigungen des Körpers (2, 3) bilden, aus Glas- oder Kohlefasern bestehen, die in Harz gegossen sind.

11. Verfahren zur Herstellung eines Rotors (1) nach einem der vorstehenden Ansprüche und einen Körper (2,3) umfassend, der aus mehreren Verbundschichten besteht, die Fasern enthalten, die durch ein Harz gebunden sind,

, wobei das Verfahren den Schritt zum Gießen einer ersten Verbundschicht umfasst, wobei die Fasern der ersten Schicht in einer gleichen vorbestimmten Richtung (F1) ausgerichtet sind, durch die Schritte zum Gießen von mindestens einer zweiten Verbundschicht gekennzeichnet, die auf die erste Verbundschicht überlagert ist, wobei die Fasern der mindestens einen zweiten Schicht

in einer vorbestimmten Richtung (F2) ausgerichtet sind, die sich von der Richtung (F1) der benachbarten Schicht unterscheidet, die sie überlagert, und das Harz aushärtet.

12. Elektromagnetischer Axialstrommotor oder -generator, **dadurch gekennzeichnet, dass** er mindestens einen Rotor (1) nach einem der Ansprüche 1 bis 10 umfasst, wobei der elektromagnetische Motor oder Generator mindestens einen Stator mit mindestens einer Wicklung umfasst, wobei der elektromagnetische Motor oder Generator einen oder mehrere Luftspalte zwischen dem mindestens einen Rotor (1) und dem mindestens einen Stator umfasst.

**Claims**

1. A rotor (1) of a motor or electromagnetic generator having a body (2, 3) including an inner hub (2) concentric to a central axis (7) of rotation of the rotor (1), branches (3) radially extending relative to the central axis (7) of rotation from the inner hub (2) to a binding band (8) forming a circular outer perimeter of the rotor (1), at least

   one magnet structure (10) with a plurality of magnets (4) being housed in each space delimited between two adjacent branches (3), the body (2, 3) consisting of several composite layers containing fibres bound by a resin, **characterised in that** each unit magnet (4) of the plurality of unit magnets (4) of the magnet structure (10) extends in
   the axial direction of the rotor (1) and is of an elongated polygonal shape or has an at least partially ovoid contour by including a first portion forming the body of the unit magnet (4) having a larger cross-sectional area and extending over a greater length of the unit magnet (4) than at least one second portion of longitudinal end
   pointing towards an associated longitudinal end of the unit magnet (4) decreasing in cross-sectional area coming nearer to the longitudinal end, and **in that** the layers are superimposed and the fibres of each layer are oriented in a predetermined different direction (F1, F2) for two superimposed layers, a radial covering skin being located
   on each of the two opposite faces of the body (2, 3) of the rotor by consisting of several superimposed composite layers containing fibres bound by a resin, the magnets (4) of the magnet structure (10) being secured together by a fibre-reinforced resin.

2. The rotor (1) according to claim 1, wherein the fibres of a composite layer of the body (2, 3) are oriented perpendicularly to the fibres of an adjacent superimposed composite layer.

3. The rotor (1) according to claim 1, wherein the fibres of a composite layer of the body (2, 3) are oriented with an offset of 30° to 45° relative to the fibres of an adjacent superimposed composite layer.

4. The rotor (1) according to any one of the preceding claims, wherein
the number of composite layers of the body (2, 3) is determined according to an axial thickness of the magnet structure (10) and the covering skins have a thickness ranging from 0.3 to 2 mm.

5. The rotor (1) according to any one of the preceding claims, wherein
each branch (3) has a decreasing width as it moves away from the inner hub (2), to terminate in a tapered point (3b) against the binding band (8).

6. The rotor (1) according to the preceding claim, wherein the bases (3a) of two adjacent branches (3) are separated by an intermediate portion (9) of the inner hub (2), the intermediate portion (9) being of a rounded concave shape towards the axis of the rotor (1), the inner hub (2) having a radius equal to at least a quarter of the radius of the rotor (1).

7. The rotor (1) according to any one of the preceding claims, wherein each magnet structure (10) has an increasing width
as it moves away from the inner hub (2) to terminate against the binding band (8) surrounding the rotor (1).

8. The rotor (1) according to the preceding claim, wherein each magnet structure (10) integrates at least one meshing having meshes each delimiting a housing for a respective unit magnet (4),
each housing having inner dimensions just sufficient to leave a space between the housing and the unit magnet (4) filled with the fibre-reinforced resin after introducing a unit magnet (4) therewithin, the meshes being made of fibre-reinforced insulating material.

9. The rotor (1) according to any one of the preceding claims, wherein
each magnet structure (10) between two adjacent branches (3) is embedded in at least one composite layer, the rotor (1) also being coated within at least one composite layer encompassing the structures of embedded magnets and the body (2, 3) consisting of several composite layers.

10. Rotor (1) according to the preceding claim, wherein the composite layers embedding the rotor and constituting the hub (2) and the branches of the bodies (2, 3) are made of glass or carbon fibres cast in resin.

11. A method for manufacturing a rotor (1) according to any one of the preceding claims and comprising a body (2,3) consisting of several composite layers containing fibres bound by a resin,

which method includes the step of casting a first composite layer, the fibres of the first layer being oriented in a predetermined direction (F1), **characterised by** the steps of casting at least one second composite layer superimposed to the first composite layer, the fibres of said at least one second layer
being oriented in a predetermined direction (F2) different from the direction (F1) of the adjacent layer it superimposes, and of hardening the resin.

12. An axial flow motor or electromagnetic generator, **characterised in that** it comprises at least one rotor (1) according to any one of
claims 1 to 10, the motor or electromagnetic generator comprising at least one stator carrying at least one winding, the motor or electromagnetic generator comprising one or more air gaps between said at least one rotor (1) and said at least one stator.

**FIG.1**

**FIG.2**

**FIG.3**

**FIG 4**

4b  4a  4  4b

**FIG.5a**

11  4b  4a  4  4b

**FIG.5b**

4a

4  4b  10

**FIG.5c**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3014255 A
- DE 102010039123 A
- FR 1475501
- US 2003141721 A